Europäisches Patentamt

(19) European Patent Office

Office européen des brevets

(11) Veröffentlichungsnummer: **0 157 728** A1

(12) # EUROPÄISCHE PATENTANMELDUNG

(21) Anmeldenummer: 85730039.6

(22) Anmeldetag: **14.03.85**

(51) Int. Cl.⁴: **B 23 B 3/16**, B 23 Q 3/155

(30) Priorität: **17.03.84 DE 3410276**

(43) Veröffentlichungstag der Anmeldung: **09.10.85**
**Patentblatt 85/41**

(84) Benannte Vertragsstaaten: **IT**

(71) Anmelder: **H. Wohlenberg KG, GmbH & Co.,**
**Wohlenbergstrasse 6 - 8, D-3000 Hannover 1 (DE)**

(72) Erfinder: **Strate, Hans, Peperfeld 29,**
**D-3000 Hannover 91 (DE)**
Erfinder: **Simon, Hans-Dieter, Debberode 37,**
**D-3014 Laatzen 1 (DE)**

(74) Vertreter: **Eikenberg & Brümmerstedt Patentanwälte,**
**Schackstrasse 1, D-3000 Hannover 1 (DE)**

(54) **Drehmaschine.**

(57) Die Erfindung befasst sich mit einer Drehmaschine, die als Bearbeitungszentrum ausgebildet ist und mit welcher neben Dreharbeiten auch andere Bearbeitungsverfahren durchführbar sind. Der Werkzeugschlitten (5) enthält einen um eine vertikale Achse drehbaren und in verschiedenen Winkelpositionen festlegbaren Bearbeitungsturm (9), der mit einer antreibbaren Spindeleinheit (11) zur Aufnahme von Werkzeugen ausgerüstet ist und wenigstens eine Aufnahme von Werkzeugen ausgerüstet ist und wenigstens eine Aufnahmevorrichtung (13) zur lösbaren Befestigung von Werkzeugen oder Bearbeitungseinheiten besitzt. Für den Werkzeugwechsel sind auf der Drehmaschine Werkzeugmagazine (14, 15) angeordnet, die einen raschen Austausch der Werkzeuge bzw. Werkzeugeinheiten erlauben. Die erfindungsgemässe Frehmaschine ermöglicht eine Komplett-Bearbeitung von Rundkörper-Grundformen und macht allein von den Einrichte- und Transportzeiten her mehrere nach nur einem Bearbeitungsverfahren arbeitende Werkzeugmaschinen überflüssig.

H. Wohlenberg KG GmbH & Co.                    301/50 EP


## Drehmaschine


Die Erfindung betrifft eine Drehmaschine mit einer Antriebsvorrichtung für eine Werkstückaufnahme, mit einem Reitstock und mit einem auf dem Maschinenbett verfahrbaren Werkzeugschlitten.

Mit solchen Drehmaschinen lassen sich Rundkörper herstellen und bearbeiten. Es hat sich jedoch in der Fertigungspraxis gezeigt, daß Werkstücke mit einer Rundkörper-Grundform sehr oft nachfolgenden Fräs- oder Bohrbearbeitungen unterzogen werden müssen. Hierzu gehört beispielsweise die Fertigung von runden Zapfen mit Innen- und Außengewinden größerer Abmessungen.

Eine Möglichkeit besteht darin, das Werkstück nach der Drehbearbeitung in eine oder nacheinander sogar in mehrere teure andere, nur nach einem Bearbeitungsverfahren arbeitende Werkzeugmaschinen umzuspannen.

Um diesen Aufwand zu vermeiden, sind Maschinen entwickelt worden, mit denen Werkstücke komplett fertig bearbeitet werden können. Dies bedingt jedoch den Einsatz von unterschiedlichsten Fertigungseinheiten, wie z. B. Revolverköpfen, Fräseinheiten, Schleifeinheiten, die sich ohne Kollision auf einer Maschine

0157728

nicht gleichzeitig anbringen lassen. Daher hat man dort die betreffende Bearbeitungseinheit austauschbar ausgebildet, was bei schweren Maschinen aufgrund des erforderlichen hohen Einrichte- und Transportzeitaufwandes wirtschaftlich nicht immer vertretbar ist.

Der Erfindung liegt die Aufgabe zugrunde, eine Drehmaschine der eingangs genannten Art zu schaffen, welche neben einer Drehbearbeitung auch mit vergleichbarer Effektivität andere Bearbeitungsverfahren wie z. B. Bohren, Tiefbohren, Fräsen, Drehfräsen, Schleifen, Honen, Wirbeln durchführen kann, so daß eine Komplett-Bearbeitung von Rundkörper-Grundformen möglich ist, ohne daß hohe Einrichte- und Transportzeiten anfallen.

Die gestellte Aufgabe wird gemäß der Erfindung dadurch gelöst, daß der Werkzeugschlitten einen um eine vertikale Achse drehbaren und in verschiedenen Winkelpositionen festlegbaren Bearbeitungsturm enthält, daß der Bearbeitungsturm mit einer antreibbaren Spindeleinheit zur Aufnahme von Werkzeugen ausgerüstet ist und wenigstens eine Aufnahmevorrichtung zur lösbaren Befestigung von Werkzeugen oder Bearbeitungseinheiten besitzt.

Durch die Drehbarkeit des Werkzeugschlittens um eine vertikale Achse kann wahlweise ein an der Spindeleinheit angebrachtes Werkzeug, z. B. ein Fräswerkzeug, oder ein anderes an der Aufnahmevorrichtung angebrachtes Werkzeug zur Bearbeitung in Betrieb genommen werden.

Dabei ist der Bearbeitungsturm motorisch um seine Achse drehbar und die Drehung numerisch gesteuert, so daß die gewünschte Winkelposition des Bearbeitungsturms und damit die Betriebslage des einzusetzenden Werkzeugs programmierbar ist. Natürlich kann der Bearbeitungsturm auch manuell um seine Achse drehbar sein.

Vorzugsweise sind die Spindeleinheit und die Aufnahmevorrichtung an gegenüberliegenden Seiten des Bearbeitungsturms angeordnet, so daß in der Regel Drehschritte des Turms von 90° oder 180° erfolgen können, um das jeweils gewünschte Werkzeug in seine Arbeitsstellung zu bringen.

Die Arretierung des Bearbeitungsturms kann jedoch in jeder gewählten Winkelstellung erfolgen, was sich z. B. auf einfache Weise durch bekannte Planzahnringe bewirken läßt.

In Ausgestaltung der Erfindung ist die Spindeleinheit höhenverstellbar angebracht, und die Höhenverstellung numerisch steuerbar, so daß ein weiterer Freiheitsgrad in der Bewegung des von der Spindeleinheit angetriebenen Werkzeugs gegeben ist, der es auch erlaubt, im Bedarfsfall die Spindeleinheit aus dem Wege zu schaffen, wenn sie nicht benötigt wird bzw. die Bearbeitung in eine von der Hauptmaschinenachse 39 abweichende Ebene zu verlegen.

Es ist von Vorteil, wenn die Spindeleinheit an beiden Enden mit je einer Werkzeugaufnahme versehen ist, denn es ist dann möglich, an beiden Enden jeweils ein Werkzeug, z. B. ein Fräswerkzeug anzubringen, so daß durch eine Drehbewegung von 180° wahlweise das eine oder das andere Werkzeug in die Betriebsstellung gebracht werden und damit von beiden Seiten Stirnflächen des Werkstücks angefahren werden können.

Wenn die Spindel der Spindeleinheit einen unabhängigen, numerisch gesteuerten Antrieb besitzt, kann dieser anstelle der Antriebsvorrichtung für die Werkstückaufnahme in Funktion treten. Dabei ist die Antriebsvorrichtung für die Werkstückaufnahme vorzugsweise abkuppelbar und stattdessen ein numerisch steuerbarer Antrieb für eine exakte Winkelpositionierung oder eine numerisch gesteuerte Vorschubbewegung des Werkstücks betätigbar. Auf diese Weise ist z. B. ohne Werkzeugwechsel eine Drehbearbeitung und eine anschließende Fräsbearbeitung möglich, wenn in der Aufnahmevorrichtung des Bearbeitungsturms ein Drehmeißel und an der Spindeleinheit ein Fräswerkzeug angebracht wird. Außerdem ist eine Dreh-Fräsbearbeitung möglich, bei der sich nicht nur das Werkzeug, sondern auch das Werkstück dreht.

Ein sehr rascher Werkzeugwechsel läßt sich dadurch erreichen, wenn zumindest die an der Werkzeugaufnahme anzubringenden Werkzeuge bzw. Werkzeugeinheiten in einem Magazinschlitten angeordnet sind.

Dabei ist es zweckmäßig, den Magazinschlitten hinter dem Reitstock anzuordnen und den Magazinschlitten mit dem Reitstock mechanisch zu verbinden, so daß er dessen Verschiebebewegung folgt. Hierdurch können die Umrüstzeiten verkürzt werden, wenn der Werkzeugschlitten für die Werkzeugübernahme am Reitstock vorbei bis vor den Magazinschlitten verfahrbar angeordnet ist. Natürlich kann der Magazinschlitten auch einen eigenen Vorschubantrieb besitzen.

Dabei ist vorzugsweise der Werkzeugschlitten für die Werkzeugübernahme am Reitstock vorbei bis vor den Magazinschlitten verfahrbar, so daß dort die Übergabe des Werkzeugs bzw. der Bearbeitungseinheit automatisch erfolgen kann.

Die Werkzeuge bzw. die Werkzeugeinheiten sind vorzugsweise auf jeweils einer gleich ausgebildeten Palette angeordnet, die kraft- und formschlüssig mit der Aufnahmevorrichtung am Bearbeitungsturm verbindbar ist. Dadurch ist es möglich, jede, auch schwere und umfangreiche Bearbeitungseinrichtung automatisch und programmgesteuert zu wechseln.

Die Aufnahmevorrichtung enthält dabei zwei aneinander angrenzende rechtwinklige Anlageflächen für die Palette, von denen eine kürzere horizontal und eine längere vertikal verläuft, wobei in der vertikalen Anlagefläche horizontal verlaufende Führungen vorgesehen sind, auf die die Palette von der Seite her aufschiebbar ist.

0157728

Vorzugsweise ist eine mittlere Führungsleiste und eine obere und untere Führungsleiste vorhanden, von denen die obere und untere Führungsleiste als Spannleisten ausgeführt sind. Hierdurch kann die Palette nach ihrer Positionierung auf einfache Weise festgelegt werden.

Um die Einführung zu erleichtern, sind die Spannleisten vorzugsweise an ihren freien, in Profilnuten der Palette eingreifenden Enden mit Laufrollen versehen.

Ferner sind in der horizontalen Anlagefläche Stützrollen angeordnet, die im Normalzustand unterhalb der Anlagefläche liegen, beim Palettenwechsel jedoch so weit anhebbar sind, daß sie über die Anlagefläche vorstehen. Hierdurch wird die Einschiebebewegung der Palette erheblich erleichtert.

Um sicherzustellen, daß die Palette auch tatsächlich ihre vorgegebene Betriebslage einnimmt, ist es zweckmäßig, eine Preßvorrichtung vorzusehen, durch die die eingesetzte Palette an die horizontale Anlagefläche andrückbar ist.

Im Magazinschlitten ist zweckmäßigerweise für jede Werkzeugeinheit ein Hydraulikantrieb vorhanden, durch den eine zugeordnete Palette in die Aufnahmevorrichtung einschiebbar und von dieser in das Magazin zurückbewegbar ist. Hierdurch ist ein rascher Werkzeugwechsel ohne Auswechseln aufwendiger Zusatzeinrichtungen möglich.

Vorzugsweise ist ein weiteres stationäres Magazin für Langwerkzeuge vorhanden, an das der Werkzeugschlitten heranfahrbar ist. Hierdurch ist es möglich, mit derselben Maschine auch z.B. Tiefbohrvorgänge oder Innendreharbeiten mit langen Bohrstangen vorzunehmen.

Die Erfindung wird nachfolgend anhand von in der Zeichnung dargestellten Ausführungsbeispielen näher erläutert. In der Zeichnung bedeuten:

Fig. 1    eine Draufsicht auf eine erfindungsgemäß
          ausgebildete Drehmaschine,

Fig. 2    eine Seitenansicht der in Fig. 1 dargestellten Maschine,

Fig. 3    den Bearbeitungsturm in Seitenansicht,
          Vorderansicht, Rückansicht und Draufsicht,

Fig. 4    eine Draufsicht auf den mit einem Drehwerkzeug ausgerüsteten Bearbeitungsturm in einer
          üblichen Bearbeitungs-Position,

Fig. 5    die Ausrüstung des Spindelantriebs mit je
          einem Fräswerkzeug in zwei um 180° versetzten
          Positionen,

Fig. 6    die Ausrüstung der Spindeleinheit mit einer
          Tiefbohreinrichtung,

Fig. 7    den Anbau und die Positionierung einer Bohrstangenausrüstung an der Aufnahmevorrichtung,

Fig. 8    den Anbau einer mit einem Antrieb versehenen
          Schleifspindel an der Aufnahmevorrichtung und

Fig. 9    die Befestigung einer Werkzeugpalette an der
          Aufnahmevorrichtung.

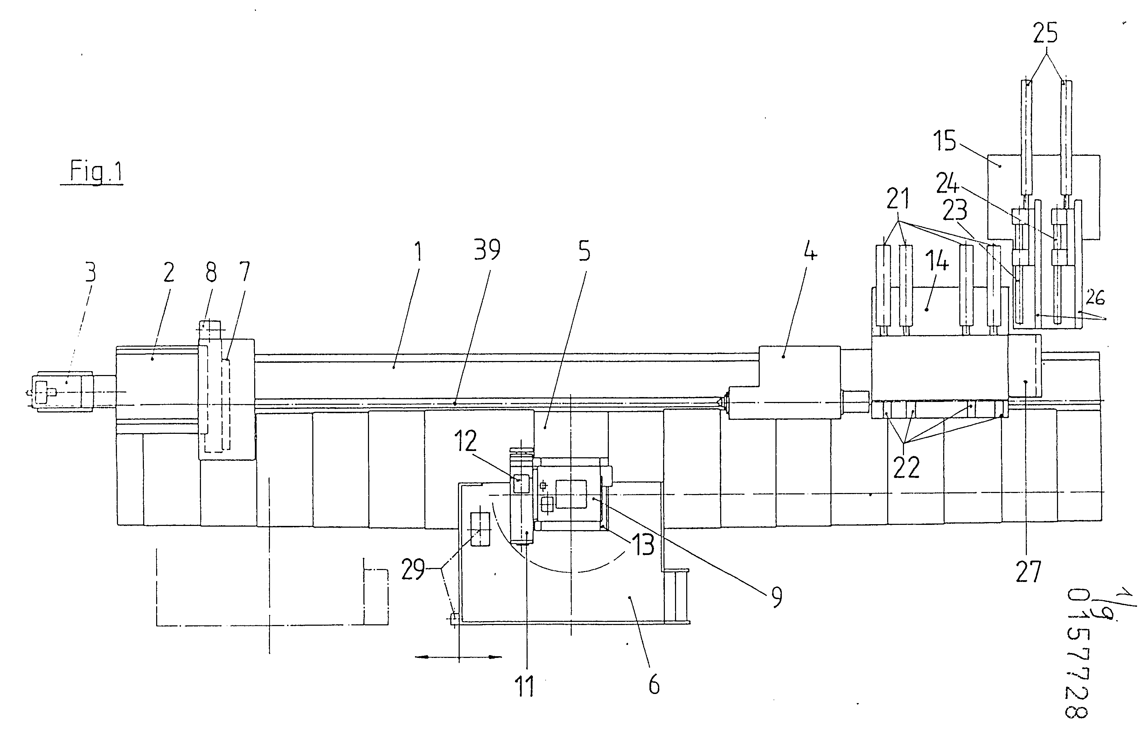

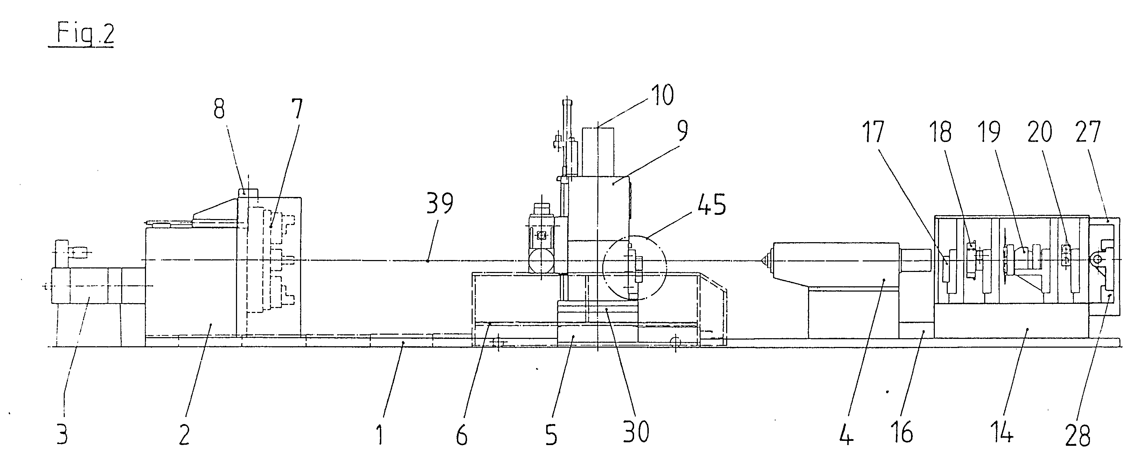

Die in Fig. 1 und 2 dargestellte Drehmaschine enthält
ein Maschinenbett 1, einen Spindelkasten 2, eine dem Spindelkasten vorgeschaltete Antriebsvorrichtung 3, einen Reitstock 4 und
einen Werkzeugschlitten 5, der mit einer Arbeitsbühne 6 auf dem
Maschinenbett 1 verfahrbar ist. Ein nicht dargestelltes Werkstück kann zwischen einer als Futter oder Planscheibe ausgebildeten Werkstückaufnahme 7 und dem Reitstock 4 eingespannt und durch die Antriebsvorrichtung 3 über den Spindelkasten 2 in Drehung versetzt werden. Die Antriebsvorrichtung 3 kann ausgekuppelt werden. Die Werkzeugaufnahme 7 arbeitet dann als rotatorische Achse und ist durch einen numerisch steuerbaren Antrieb 8 antreibbar, mit dem exakte Winkelpositionen des Werkstücks eingestellt werden können oder eine numerisch gesteuerte Vorschubbewegung des Werkstücks bewirkt werden kann.

Auf dem Werkzeugschlitten 5 ist ein zentraler, später noch in Einzelheiten beschriebener Bearbeitungsturm 9 angebracht, der um eine vertikale Achse 10 drehbar ist. Der Bearbeitungsturm 9 trägt alle Bearbeitungseinrichtungen und wird den jeweiligen Aufgaben entsprechend ausgerüstet. Er hat etwa rechteckige Form und ist an seiner einen Seite mit einer Spindeleinheit 11 versehen, die eine unabhängige Antriebsvorrichtung 12 besitzt. Auf der der Spindeleinheit gegenüberliegenden Seite ist eine Aufnahmevorrichtung 13 zur lösbaren Befestigung von Werkzeugen oder Bearbeitungseinheiten vorgesehen.

Diese Werkzeuge bzw. Bearbeitungseinheiten sind in zwei Magazinen 14 und 15 untergebracht. Das Magazin 14 ist als Schlitten ausgebildet und auf dem Maschinenbett 1 verfahrbar. Vorzugsweise ist der Magazinschlitten 14 über ein Verbindungsstück 16 mit dem Reitstock 4 verbunden, so daß er von diesem mitgeschleppt wird und dadurch Zeit beim Werkzeugwechsel eingespart werden kann. Der Magazinschlitten kann aber auch mit einem eigenen Antrieb versehen werden.

Bei dem dargestellten Ausführungsbeispiel enthält der Magazinschlitten 14 vier Werkzeugeinheiten, und zwar einen Drehwerkzeugschieber 17, einen Scheibenrevolverkopf 18, einen Revolverkopf 19 mit angetriebenen Werkzeugen und eine Bohr- Vorschubeinheit 20.

Der Werkzeugschlitten 5 kann über den Reitstock 4 hinaus vor das Magazin 14 in jeweils eine solche Stellung gefahren werden, daß eine der Werkzeugeinheiten 17 bis 20 in die Werkzeugaufnahme 13 des Bearbeitungsturms geschoben werden kann. Für die Werkzeugübergabe ist jeder Werkzeugeinheit ein Hydraulikkolben 21 zugeordnet, der über eine mit der Aufnahmevorrichtung 13 in Flucht stehende Führung 22 die jeweilige Werkzeugeinheit in die Aufnahmevorrichtung 13 hineinschiebt oder aus dieser herauszieht. Bei der Werkzeugübergabe nimmt der Bearbeitungsturm 9 eine gegenüber der Darstellung in Fig. 1 um 180° gedrehte Lage ein.

Das Magazin 15 ist versetzt zum Magazin 14 ortsfest an oder neben der Maschine angebracht. Es enthält bei dem dargestellten Beispiel zwei Langwerkzeuge in Form von zwei unterschiedlich langen Bohrstangenausrüstungen 23 und 24. Die Werkzeugeinheiten 23 und 24 sind ebenfalls mittels Hydraulikkolben 25 auf Führungen 26 in Richtung auf den Bearbeitungsturm 9 zu und von diesem fort bewegbar. Wegen des Versatzes gegenüber dem Magazin 14 ist am Magazin 14 seitlich ein Ansatz 27 mit einer Führung 28 angebracht, wobei die Führung 28 in der jeweiligen Position eine Fortsetzung einer der Führungen 26 bildet.

Auf der Arbeitsbühne 6 sind Bedienungspaneele 29 vorgesehen, an denen sämtliche Bewegungen für die Bearbeitung und den Werkzeugwechsel einschließlich der Drehung des Bearbeitungsturms 9 programmiert und gesteuert werden können.

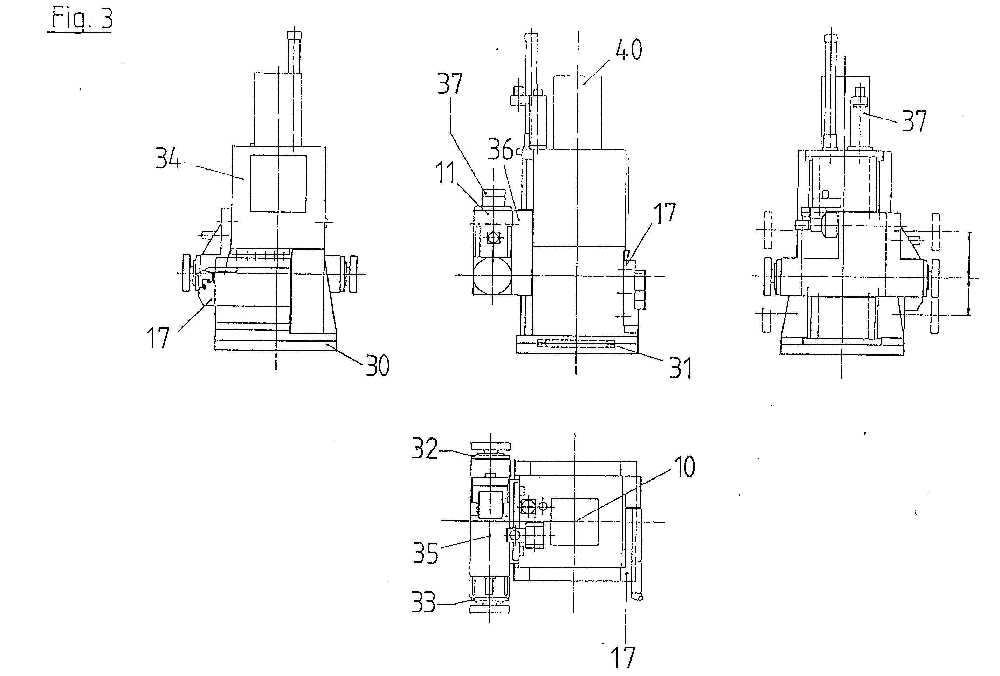

Fig. 3 zeigt den Bearbeitungsturm 9 in drei Ansichten und in der Draufsicht in näheren Einzelheiten. Über eine Grundplatte 30 ist der Ständer 34 des Bearbeitungsturms 9 mit dem Werkzeugschlitten 5 verbunden. Über an sich bekannte Planzahnringe 31 kann der Bearbeitungsturm 9 in jeder Verdrehstellung gegenüber dem Werkzeugschlitten 5 festgesetzt und gegen Bearbeitungs-Reaktionskräfte gesichert werden. An einer Seite des Ständers befindet sich die Spindeleinheit 11, die bei dem dargestellten Ausführungsbeispiel als Fräsgerät eingesetzt wird. Die Spindeleinheit besitzt zwei zur Spindelachse 35 koaxiale Werkzeugaufnahme -
köpfe 32 und 33. Die Spindeleinheit 11 ist an einem mittels eines
Motors 37 vertikal verfahrbaren Schlitten 36 angebracht, so daß
die Spindeleinheit für Bearbeitungsaufgaben numerisch gesteuert
vertikal verfahrbar ist oder aber auch bei Nichtgebrauch aus dem
Weg gebracht werden kann. Die vertikale Bewegung ist in der
rechten Ansicht in Fig. 3 angedeutet.

Die Spindeleinheit 11 besitzt eine unabhängige Antriebsvorrichtung 37, die vorzugsweise ebenso wie die Vertikalbewegung des Schlittens 36 und die Drehbewegung des Bearbeitungsturms 9 um die vertikale Achse 10 numerisch steuerbar ist. Bei
Verwendung der Spindeleinheit 11 für Fräsarbeiten übernimmt die
Antriebsvorrichtung 37 die Funktion des Hauptantriebs, während
die Antriebsvorrichtung 3 abgekuppelt wird und das Werkstück über
den Antrieb 8 in eine gewünschte Winkelposition gebracht wird, in
der die Fräsbearbeitung vorgenommen werden kann oder aber eine
numerisch gesteuerte Vorschubbewegung erfährt.

Auf der der Spindeleinheit 11 gegenüberliegenden Seite
des Ständers 34 ist in der Aufnahmevorrichtung ein Drehwerkzeugschieber 17 angebracht. Mit einem dergestalt ausgerüsteten Bearbeitungsturm läßt sich ohne Unterbrechung durch Umspannen oder
Werkzeugwechsel beispielsweise eine Drehbearbeitung und eine anschließende Fräsbearbeitung durchführen. Die Energiezuführung zum
Ständer 34 und allen Anbaueinheiten erfolgt über eine zentrale
Drehdurchführung 40 entlang der vertikalen Drehachse 10.

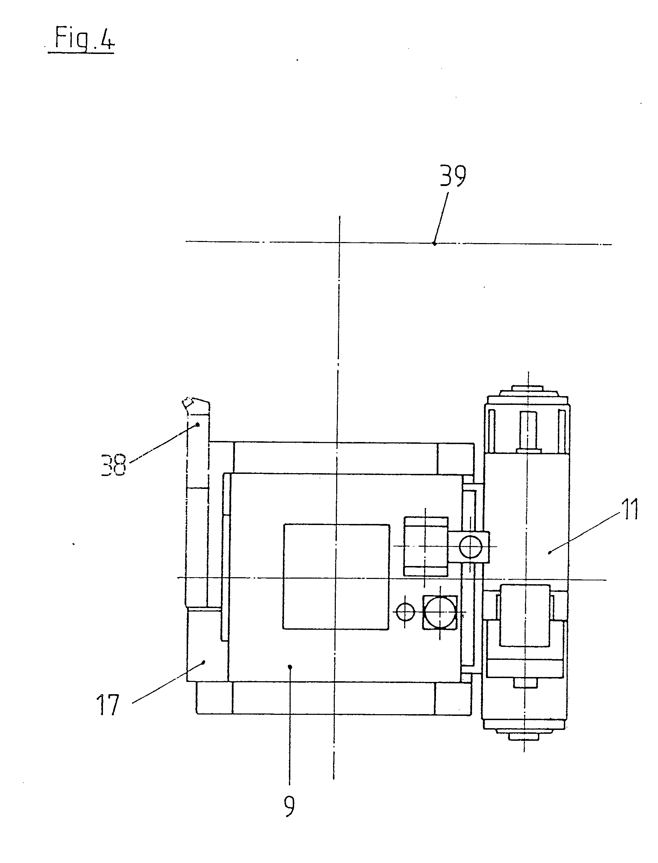

Die Vielseitigkeit der erfindungsgemäß ausgebildeten
Maschine ist aus den Fig. 4 bis 8 ersichtlich.

Fig. 4 zeigt die Ausrüstung des Bearbeitungsturms 9
ausschließlich mit einem Drehwerkzeugschieber 17, wobei sich der
Drehmeißel 38 in einer üblichen Bearbeitungsposition zu einem auf
die Maschinenhauptachse 39 zentrierten Werkstück befindet.

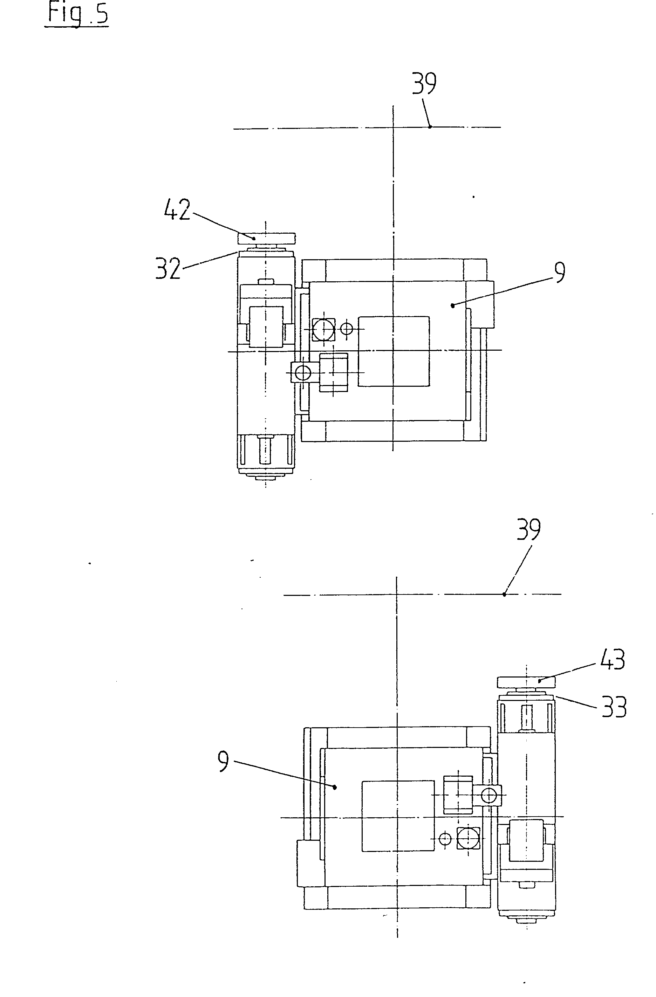

Fig. 5 zeigt die Ausrüstung des Bearbeitungsturms 9 mit Fräswerkzeugen 42 und 43 an den beiden Werkzeugaufnahmen 32 und 33 in verschiedenen Positionen, wodurch ein Heranfahren an das Werkstück von zwei Seiten möglich ist.

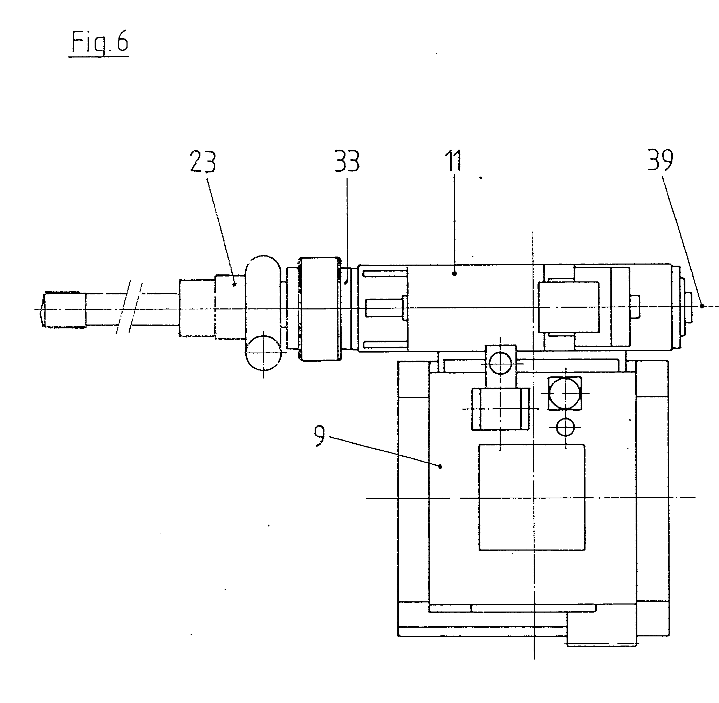

Fig. 6 zeigt die Ausrüstung mit einer Tiefbohreinrichtung 23, die hier an der Werkzeugaufnahme 33 der Spindel 11 angebracht ist, so daß in dem Werkstück eine zur Hauptmaschinenachse 39 koaxiale Bohrung angebracht werden kann.

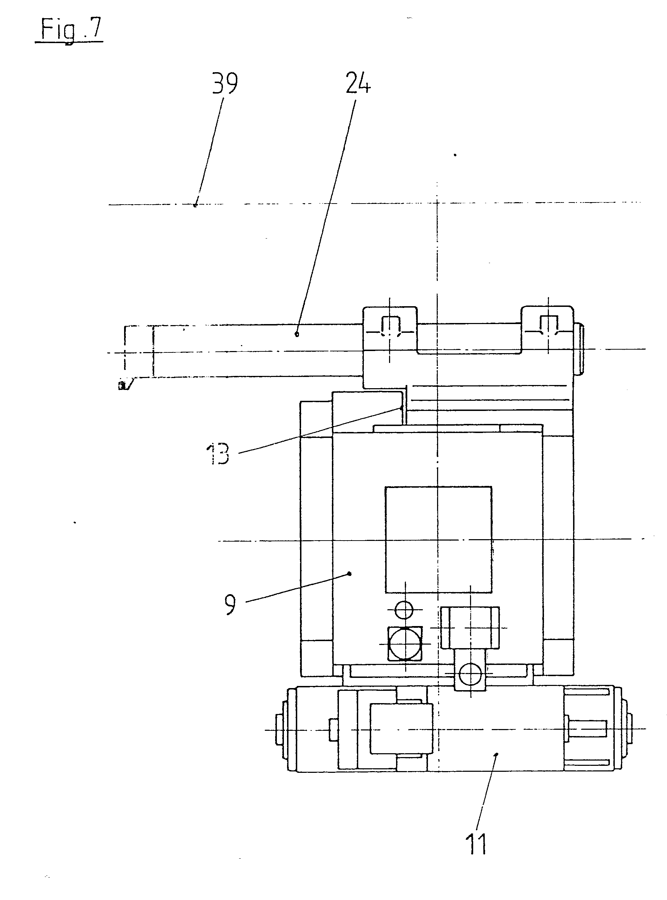

Fig. 7 zeigt den Bearbeitungsturm 9 mit einer Bohrstangenausrüstung 24 in der Aufnahmevorrichtung 13.

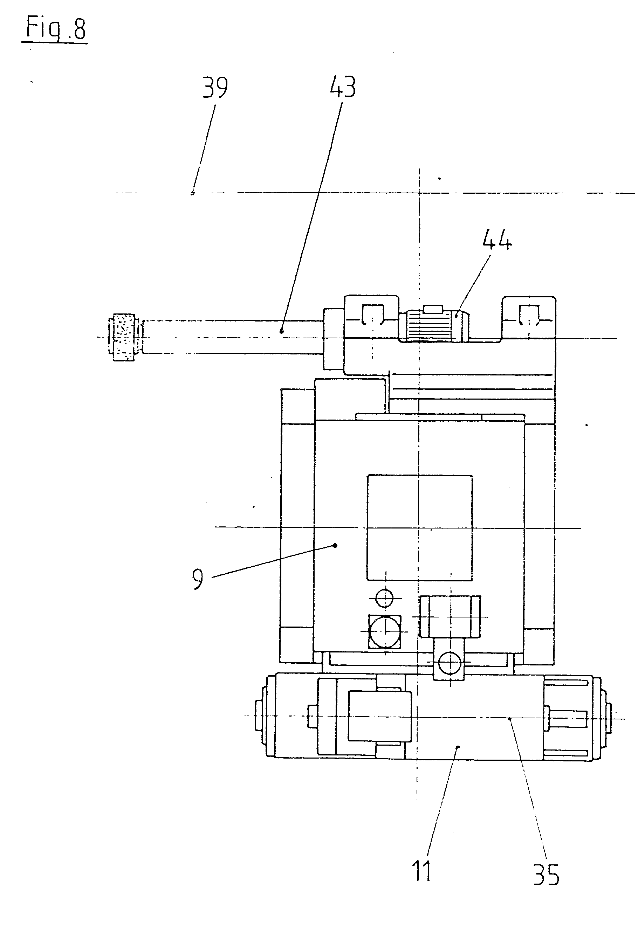

Fig. 8 schließlich zeigt die Ausrüstung des Bearbeitungsturms 9 mit einer Schleifspindel 43, die über einen unabhängigen Motor 44 antreibbar ist.

Bei den dargestellten Ausführungsbeispielen ist der Bearbeitungsturm 9 jeweils in Positionen dargestellt, in denen die Mittelachse 35 der Spindeleinheit 11 entweder parallel oder senkrecht zur Maschinenhauptachse 39 verläuft. Natürlich kann der Bearbeitungsturm im Bedarfsfall auch so arretiert werden, daß die Achse 35 schräg zur Maschinenhauptachse 39 verläuft.

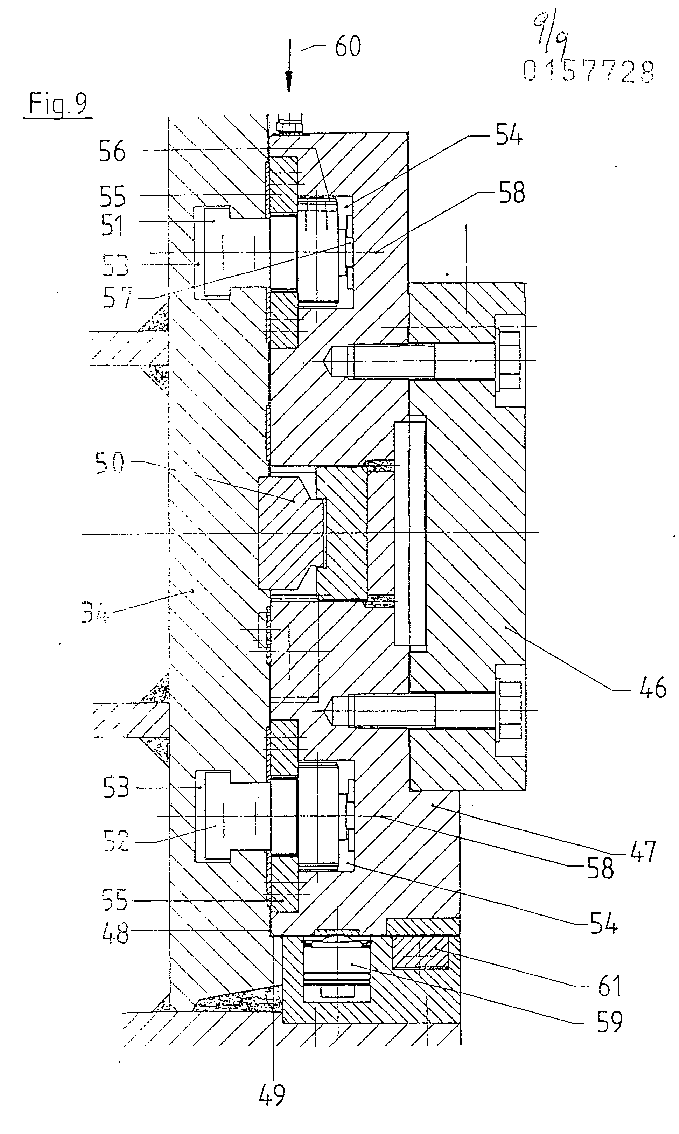

In Fig. 2 ist innerhalb des gestrichelten Kreises ein in der Aufnahmevorrichtung angebrachtes Werkzeug nur schematisch angedeutet. Fig. 9 zeigt den Inhalt des Kreises 45 in vergrößerter Darstellung, aus der die Einzelheiten über den Aufbau und die Befestigung einer Werkzeugeinheit am Ständer 34 des Bearbeitungsturms 9 deutlicher zu erkennen sind.

Es ist ersichtlich, daß der Werkzeugschieber 46 an einer Palette 47 befestigt ist, wobei die Palette 47 für alle Werkzeugeinheiten die gleiche Ausbildung besitzt, so daß alle Werkzeugeinheiten in die Aufnahmevorrichtung des Ständers 34 passen. Die Palette ist kraft- und formschlüssig mit der Aufnahmevorrichtung verbindbar. Die Aufnahmevorrichtung besitzt zwei aneinander angrenzende, rechtwinklige Anlageflächen 48 und 49 für die Palette, von denen die kürzere Fläche 49 horizontal und die längere Fläche 48 vertikal verläuft. In der vertikalen Anlagefläche sind drei horizontal verlaufende Führungen vorgesehen, auf die die Palette 47 von der Seite her mittels der Hydraulikkolben 21 des Magazinschlittens 14 (Fig. 2) aufschiebbar ist. Die mittlere Führung 50 besteht aus einer am Ständer 34 befestigten Leiste, die eine grobe Führung beim Einschieben der Palette 47 bewirkt. Die obere Führung 51 und die untere Führung 52 sind als Spannleisten ausgebildet, die mit Spiel in T-förmigen Ausnehmungen 53 des Ständers ruhen und an ihren freien, über die Anlagefläche 48 herausstehenden Enden in Profilnuten der Palette 47 eingreifen, wobei die Profilnuten 54 ebenfalls T-förmig ausgebildet sind, so daß die freien Enden der Spannleisten an der Palette 47 angebrachte Leisten 55 hintergreifen. Zur Entlastung beim Ein- und Ausschieben der Palette sind an den freien Enden der Spannleisten Rollen 56 und 57 angebracht, die jeweils um eine Achse 58 drehbar sind.

In die untere Anlagefläche 49 sind Stützrollen oder Stützkugeln 59 eingelassen, die im Normalzustand unterhalb der Anlagefläche 49 liegen, die jedoch durch nicht dargestellte Mittel beim Palettenwechsel so weit anhebbar sind, daß sie über die Anlagefläche vorstehen. Beim Ein- und Ausschieben der Palette 47 wird diese auf den Stützrollen bzw. Stützkugeln 59 entlangbewegt.

Nachdem die Palette ihre vorgegebene Lage in der Aufnahmevorrichtung erreicht hat, werden die Stützrollen bzw. Stützkugeln 59 abgesenkt, so daß die Palette auf der Anlagefläche 49 ruht. Eine Preßvorrichtung 60, die nur durch einen Pfeil angedeutet ist, sorgt dafür, daß eine einwandfreie Anlage der Palette an der Fläche 49 hergestellt wird. Durch Keilschuhe 61 wird die positionierte Palette 47 abgefangen.

Als letzter Schritt werden die Spannleisten 51 und 52 hydraulisch betätigt, so daß sie die Palette 47 gegen die Anlagefläche 48 ziehen. Die Palette hat damit ihre endgültige Betriebslage erreicht, die jederzeit und für jede andere Palette reproduzierbar hergestellt werden kann.

Die erfindungsgemäße Ausbildung des Bearbeitungsturms
und der zugehörigen Werkzeugmagazin- und Werkzeugwechselvorrichtung ist insbesondere für Schwerdrehmaschinen von großem Vorteil,
mit denen große und damit extrem schwere Werkstücke mehrfachen
Bearbeitungsverfahren unterzogen werden müssen. Allein der Drehwerkzeugschieber 17 besitzt bei einem praktisch ausgeführten Beispiel ein Gewicht von über 12 t, so daß ersichtlich ist, welche
Erleichterung durch die erfindungsgemäßen Maßnahmen erzielbar
ist.

P a t e n t a n s p r ü c h e
------------------------------------

1.      Drehmaschine mit einer Antriebsvorrichtung für eine
Werkstückaufnahme, mit einem Reitstock und mit einem auf dem
Maschinenbett verfahrbaren Werkzeugschlitten, dadurch gekennzeichnet, daß der Werkzeugschlitten (5) einen um eine vertikale
Achse (10) drehbaren und in verschiedenen Winkelpositionen festlegbaren Bearbeitungsturm (9) enthält, daß der Bearbeitungsturm
mit einer antreibbaren Spindeleinheit (11) zur Aufnahme vom Werkzeugen ausgerüstet ist und wenigstens eine Aufnahmevorrichtung
(13) zur lösbaren Befestigung von Werkzeugen oder Bearbeitungseinheiten (17 bis 20) besitzt.

2.      Drehmaschine nach Anspruch 1, dadurch gekennzeichnet,
daß der Bearbeitungsturm (9) motorisch um seine Achse (10) drehbar ist und die Drehung numerisch gesteuert ist.

3.      Drehmaschine nach Anspruch 1, dadurch gekennzeichnet,
daß der Bearbeitungsturm (9) manuell um seine Achse drehbar ist.

4.      Drehmaschine nach Anspruch 2 oder 3, dadurch gekennzeichnet, daß die Spindeleinheit (11) und die Aufnahmevorrichtung
(13) an gegenüberliegenden Seiten des Bearbeitungsturms (9) angeordnet sind.

5.      Drehmaschine nach Anspruch 4, dadurch gekennzeichnet,
daß zur Arretierung des Bearbeitungsturms in der gewählten Winkelstellung Planzahnringe (31) dienen.

6.      Drehmaschine nach einem der vorherigen Ansprüche,
dadurch gekennzeichnet, daß die Spindeleinheit (11) höhenverstellbar angebracht und die Höhenverstellung numerisch steuerbar
ist.

0157728

7.      Drehmaschine nach Anspruch 6, dadurch gekennzeichnet,
daß die Spindeleinheit (11) an beiden Enden mit je einer Werkzeugaufnahme (32, 33) versehen ist.

8.      Drehmaschine nach Anspruch 7, dadurch gekennzeichnet,
daß die Spindel der Spindeleinheit (11) einen unabhängigen, numerisch gesteuerten Antrieb besitzt.

9.      Drehmaschine nach Anspruch 8, dadurch gekennzeichnet,
daß die Antriebsvorrichtung (3) für die Werkstückaufnahme (7) abkuppelbar ist und stattdessen ein numerisch steuerbarer Antrieb
(8) für eine exakte Winkelpositionierung oder eine numerisch gesteuerte Vorschubbewegung des Werkstücks betätigbar ist.

10.     Drehmaschine nach einem der vorhergehenden Ansprüche,
dadurch gekennzeichnet, daß zumindest die an der Werkzeugaufnahme
(13) anzubringenden Werkzeuge bzw. Werkzeugeinheiten (17 bis 20)
in einem Magazinschlitten (14) angeordnet sind.

11.     Drehmaschine nach Anspruch 10, dadurch gekennzeichnet,
daß der Magazinschlitten 14 hinter dem Reitstock (4) angeordnet
ist.

12.     Drehmaschine nach Anspruch 11, dadurch gekennzeichnet,
daß der Magazinschlitten (14) mit dem Reitstock (4) mechanisch
verbunden ist und dessen Verschiebebewegung folgt.

13.     Drehmaschine nach Anspruch 11, dadurch gekennzeichnet,
daß der Magazinschlitten (14) einen eigenen Vorschubantrieb besitzt.

14.     Drehmaschine nach einem der vorhergehenden Ansprüche,
dadurch gekennzeichnet, daß der Werkzeugschlitten (5) für die
Werkzeugübernahme am Reitstock (4) vorbei bis vor den Magazinschlitten (14) verfahrbar ist.

15.     Drehmaschine nach Anspruch 14, <u>dadurch gekennzeichnet,</u> daß die Werkzeuge bzw. Werkzeugeinheiten (17 bis 20) auf jeweils einer gleich ausgebildeten Palette 47 angeordnet sind, die kraft- und formschlüssig mit der Aufnahmevorrichtung 13 am Bearbeitungsturm verbindbar ist.

16.     Drehmaschine nach Anspruch 15, <u>dadurch gekennzeichnet,</u> daß die Aufnahmevorrichtung (13) zwei aneinander angrenzende rechtwinklige Anlageflächen (48, 49) für die Palette (47) besitzt, von denen eine kürzere horizontal und eine längere vertikal verläuft, und daß in der vertikalen Anlagefläche (48) horizontal verlaufende Führungen (50, 51, 52) vorgesehen sind, auf die die Palette (45) von der Seite her aufschiebbar ist.

17.     Drehmaschine nach Anspruch 16, <u>dadurch gekennzeichnet,</u> daß eine mittlere Führungsleiste (50) und eine obere und untere Führungsleiste (51 bzw. 52) vorhanden sind, von denen die obere und untere Führungsleiste als Spannleisten ausgeführt sind.

18.     Drehmaschine nach Anspruch 17, <u>dadurch gekennzeichnet,</u> daß die Spannleisten (51, 52) an ihren freien, in Profilnuten (54) der Palette (47) eingreifenden Enden mit Laufrollen (56, 57) versehen sind.

19.     Drehmaschine nach Anspruch 18, <u>dadurch gekennzeichnet,</u> daß in der horizontalen Anlagefläche (49) Stützrollen oder Stützkugeln (59) angeordnet sind, die im Normalzustand unterhalb der Anlagefläche (49) liegen, beim Palettenwechsel jedoch so weit anhebbar sind, daß sie über die Anlagefläche vorstehen.

20.     Drehmaschine nach Anspruch 19, <u>dadurch gekennzeichnet,</u> daß eine Preßvorrichtung (60) vorgesehen ist, durch die die eingesetzte Palette (47) an die horizontale Anlagefläche (49) an- drückbar ist.

0157728

21.     Drehmaschine nach einem der vorhergehenden Ansprüche, dadurch gekennzeichnet, daß im Magazinschlitten (14) für jede Werkzeugeinheit (17 bis 20) ein Hydraulikantrieb (21) vorhanden ist, durch den eine zugeordnete Palette in die Aufnahmevorrichtung (13) einschiebbar und von dieser in den Magazinschlitten (14) zurückbewegbar ist.

22.     Drehmaschine nach einem der vorhergehenden Ansprüche, dadurch gekennzeichnet, daß ein weiteres stationäres Magazin (15) für Langwerkzeuge (23, 24) vorhanden ist, an das der Werkzeugschlitten (5) heranfahrbar ist.

Fig.1

Fig.2

Fig. 3

Fig.4

Fig. 5

5/9

0157728

<u>Fig.6</u>

Fig.7

Fig.8

Fig.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | WERKSTATT UND BETRIEB, Band 111, Nr. 8, August 1978, München; W. KALMBACH "CNC-Drehmaschine als Bearbeitungszentrum", Seiten 501-504<br>* Seiten 502,503 * | 1,2,4, 5 | B 23 B 3/16<br>B 23 Q 3/155 |
| A | idem | 8,9 | |
| | --- | | |
| Y,X | DE-A-3 244 084 (HEYLIGENSTAEDT & CO.)<br>* Ansprüche 1,2,4; Seite 6, Zeile 21 - Seite 8, Zeile 25; Figuren 1-3 * | 1,2,4 6,7 | |
| | --- | | |
| A | DE-A-2 044 187 (HEYLIGENSTAEDT & CO.)<br>* Figur * | 1,2,4 5 | RECHERCHIERTE SACHGEBIETE (Int. Cl.4) |
| | --- | | |
| A | AT-B- 354 221 (MASCHINENFABRIK WEILD AG)<br>* Anspruch 1; Seite 3, Zeilen 18-23; Figuren 1,2 * | 10,12 13 | B 23 B 3/00<br>B 23 B 11/00<br>B 23 B 29/24<br>B 23 C 7/02<br>B 23 Q 3/155 |
| | --- | | |
| A | DE-A-1 804 630 (H. WOHLENBERG AG)<br>* Ansprüche 1,3,4; Seite 6, Zeilen 1-11; Figuren 1,2 * | 10,13 | |
| | --- -/- | | |

Der vorliegende Recherchenbericht wurde für alle Patentansprüche erstellt.

| Recherchenort<br>BERLIN | Abschlußdatum der Recherche<br>18-06-1985 | Prüfer<br>MARTIN A E W |
|---|---|---|

# EUROPÄISCHER RECHERCHENBERICHT

**0157728**

Nummer der Anmeldung

EP 85 73 0039

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-B-2 318 778 (MAX MÜLLER BRINKER MASCHINENFABRIK) * Ansprüche 1-5; Spalte 4, Zeilen 30-38 * | 10,15 | |
| A | DE-B-1 602 810 (GEBR. HEINEMANN AG) * Anspruch 1; Spalte 3, Zeilen 3-35; Figur 1 * | 10,13, 15 | |
| A | PATENT ABSTRACTS OF JAPAN, Band 5, Nr. 39, 14. März 1981, Seite (M-59) (711); & JP-A-55-164450 (KUBOTA TEKKO K.K.) 22-12-1980 | 16,17 | |

RECHERCHIERTE SACHGEBIETE (Int. Cl.4)

Der vorliegende Recherchenbericht wurde für alle Patentansprüche erstellt.

| Recherchenort BERLIN | Abschlußdatum der Recherche 18-06-1985 | Prüfer MARTIN A E W |
|---|---|---|